# EUROPEAN PATENT SPECIFICATION

(11) **EP 3 364 315 B1**
(45) Date of publication and mention of the grant of the patent: **21.04.2021**
(21) Application number: 18157045.8
(22) Date of filing: 15.02.2018
(51) Int. Cl.: G06F 16/40, G09B 21/00, G09B 5/00

(54) **VISUALISATION SYSTEM**
VISUALISIERUNGSSYSTEM
SYSTÈME DE VISUALISATION

(30) Priority: 15.02.2017 EP 17156384
(43) Date of publication of application: 22.08.2018
(73) Proprietor: Televic Education NV, 8870 Izegem (BE)
(72) Inventor: VENANT, Sylvie, B-8940 Wervik (BE); DE DONDER, Xavier, B-8870 Izegem (BE)
(74) Representative: Beck, Michaël Andries T.

(56) References cited:
- US-A1- 2014 365 860
- US-A1- 2016 247 535
- JAN-TORSTEN MILDE ET AL: "The TASX-environment: an XML-based toolset for time aligned speech corpora", LREC 2002, 1 May 2002 (2002-05-01), XP055366875,

## Description

### Field of the Invention

The present invention relates to a visualisation system for applying annotation to a source message. More in particular, the present invention relates to a visualisation system for sign language learning.

### Background

The documents "LogiSignes - explication" and "LogiSignes - presentation" (both retrieved from https://www.irit.fr/presto/resultats.html on 27 January 2017), "Logiciel Partition: mode d'emploi" (retrievable from https://www.irit.fr/presto/Ressources/SLAnnotation/ ModeEmploiSLA-Mac.pdf on 24 April 2017), and "Mode d'emploi du logiciel AVV" (retrievable from https://www.irit.fr/presto/Ressources/AVV/AVV-manuel.pdf on 24 April 2017) disclose a visualisation system which allows to annotate a first video sequence from a source file with additional video sequences. The system allows for both synchronous and consecutive annotation and also permits to add further comments and symbols in text format to the first video sequence. It is the goal of the visualisation system to give sign language teachers the opportunity to react on, or to correct, video sequences recorded by their students. The visualisation system does not provide the system user with the possibility to control the pace of annotation and thus adjust the duration of an annotation while still retaining a synchronous annotation in sign language of a source message.

The document "Manual-elan_ug" (retrieved from http://www.mpi.nl/corpus/manuals/manual-elan ug.pdf on 27 January 2017) discloses an annotation tool that allows to create, edit, visualize and search annotations for video and audio data. An annotation is hereby understood to be any type of text which is linked to a selected time interval of the audio/video file. The tool can be used for orthographic and/or phonetic transcription with the aim of language analysis. The document discloses that the rate at which the video or audio data are played, can be adjusted. The annotation tool does however not provide for the possibility to interpret a source file in sign language. As such, it is not disclosed that interpretation in sign language of the source data can be synchronised to said source data by dynamically controlling its speed of display.

United States patent application publication no. 2016/247535 A1 discloses a video annotation interface including a video pane configured to display a video, a video timeline bar including a video play-head indicating a current point of the video which is being played, a segment timeline bar including initial and final handles configured to define a segment of the video for playing, and a plurality of color-coded comment markers displayed in connection with the video timeline bar. Each of the comment markers is associated with a frame or segment of the video and corresponds to one or more annotations for that frame or segment made by one of a plurality of users. Each of the users can make annotations and view annotations made by other users. The annotations can include annotations corresponding to a plurality of modalities, including text, drawing, video, and audio modalities.

United States patent application publication no. 2014/365860 A1 discloses augmenting an audio file format, which includes audio data for playback purposes, with a parallel data channel of line identifiers, or with a map associating time codes for the audio data with line numbers on the original document, to facilitate the use of such audio files for annotation purposes. The line number-time code information in the audio file is used to navigate within the audio file, and also to associate bookmark links and captured audio annotation files with line numbers of the original text document. An annotation device may provide an output document wherein links to audio and/or text annotation files are embedded at corresponding line numbers. Also, a navigation index may be generated, having links to annotation files and associated document line numbers, as well as bookmark links to selected document line numbers.

There is still a need for a system allowing dynamic control of the pace for annotating a source message by a controller managed by or reacting to the behaviour of the user of the visualisation system, allowing the annotation to be synchronized with the source message. Thereto, a duration is assigned to the source message, wherein said duration can be adjusted to maintain a synchronous annotation.

### Summary of the Invention

According to an aspect of the present invention, there is provided a visualisation system for annotating a source message as described in claim 1.

Preferably, the pace of annotating said source message is dynamically controllable by the user of the system through interaction with the controller. Most preferably, the pace of annotating said source message is dynamically controllable by the user of the system through hands-free interaction with the controller.

It is an advantage of the present invention that a duration or time lapse can be assigned to the source message as well as to portions thereof, as this has the effect that a playback speed for the source message and thus a pace of annotation can be defined. Accordingly, a portion of the source message, having an original (or natural) duration, may be annotated in a period of time that differs from said original duration allotted to the portion, allowing the annotator to spend more time (slower annotation than at natural pace) for annotation of the portion. Conversely, the system could be used to record an annotation taking up less time (thus annotating the source message at a faster than natural pace). It is a further advantage of the present invention that the user can have dynamic control of said pace for annotation. The user can thus control the pace at which his interpretation in sign language of said source message is recorded. Said control allows for the recorded annotations to be synchronised with the source message, even if the time needed for recording an annotation of a portion of the source message, is higher than the duration assigned to said portion.

It is a further advantage of the invention that it allows a sign language student to annotate a source message in text format, in sign language.

It is a further advantage of the invention that the user can control the pace of annotation, as this allows for synchronous annotation. In particular, where the pace of annotating the source message is dynamically controlled by the user of the system through hands-free interaction with the controller, the user can perform a video-based annotation in sign language, using both hands, while still being able to control the pace of annotating so as to maintain synchronization between the text and the annotation in sign language.

In an embodiment of the system according to the present invention, the controller for controlling the pace of annotation comprises a system for tracking eye movement.

It is an advantage of this embodiment that the user can rely on a system for following his progress in the text and for automatically adjusting the pace of annotation.

In an embodiment of the system according to the present invention, the controller for controlling the pace of annotation comprises at least one pedal for manipulation by foot.

It is an advantage of this embodiment that the user can actively control the pace of annotation by his own motions, as this gives him the sense of direct control of the pace.

In an embodiment of the system according to the present invention, the visualisation system further comprises a feedback module, provided with a fourth interface for recording and displaying a second annotation to said first annotation in the form of text, audio or video images.

It is an advantage of this embodiment that this allows to add further comments to the source message or to a first annotation. The feedback module is typically used by the sign language teacher for correcting or commenting on an annotation done by a student.

According to the present invention, the source message is a text, which is divided in a plurality of basic units. The time lapse is likewise divided in a plurality of basic time intervals. Each basic unit is linkable to a corresponding basic time interval. As a result, each position in said source text has a corresponding position in said time lapse.

It is an advantage that this allows to allocate a time duration to the smallest units which constitute the text of the source message. It will be clear that the duration of the text equals the sum of durations of said basic time intervals.

According to the present invention, the said basic unit is a text character.

According to the present invention, a natural or standard pace of annotation of the text of the source message corresponds with a basic time interval having a duration of 60ms per text character.

It is an advantage that a basic time interval of 60ms per text character has as an effect that the text of the source message can be annotated by default in a tempo which is perceived by an experienced user as standard, average and natural.

In an embodiment of the system according to the present invention, the annotation is synchronous.

In an embodiment of the system according to the present invention, the annotation is consecutive. According to an aspect of the present invention, there is provided a computer program product comprising code means configured to cause a processor to perform the functions of said visualisation system as described here above.

The technical effects and advantages of embodiments of the computer program product correspond *mutatis mutandis* to those of the corresponding embodiments of the system according to the invention.

### Brief Description of the Figures

These and other features and advantages of embodiments of the present invention will now be described in more detail with reference to the accompanying drawings, in which:
- Figure 1 schematically illustrates a visualisation system according to an embodiment of the present invention;
- Figure 2a and 2b schematically illustrate dynamic control of the pace of annotation; and
- Figure 3a and 3b schematically illustrate consecutive annotation by use of the visualisation system.

### Detailed Description of Embodiments

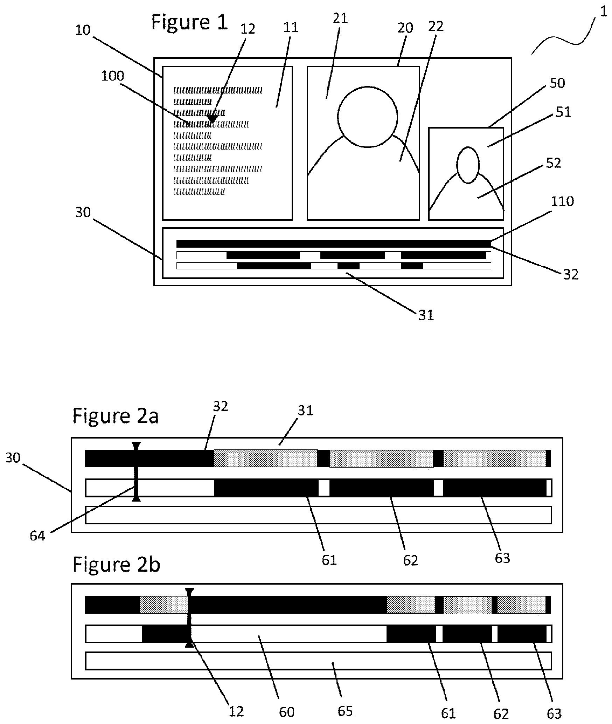

Figure 1 schematically illustrates a visualisation system **1** according to an embodiment of the invention.

A specific application of the visualisation system **1** described herein is as support tool for students who are learning sign language. Where appropriate, the invention will be described with reference to such a support tool, without intent to limit the scope of the invention to such applications.
In the context of a support tool, said visualisation system **1** is used to enable students to interpret a source message in sign language, or to transcript a source message **100** in sign language to another format. A student who is at the stage of learning to interpret a message in sign language, will not be able to interpret such a source message **100** fluently, as some, more complicated, parts of the source message **100** may take more time to interpret.

It is a goal of the invention to provide for a visualisation system **1** which allows users of the system, such as students in sign language and their teachers, to control the pace at which annotation has to be made. For the purpose of the invention, the term "annotation" refers to the interpretation of a source message **100** in sign language, meaning providing a transcription of such a message to sign language. The term "annotation" can also refer to a transcription of a source message which is in sign language, to a different format. Said annotation does not necessarily have to correspond to the complete source message **100,** but may be linked to a selected time interval of the source message **100.**
The inventors have now found that the user of the system can control the pace of annotation when the source message **100** has been assigned a duration, meaning here a period of time, wherein such a duration is modifiable by the user. For the purpose of the invention, the term "pace of annotation" refers to the pace at which the source message **100** is interpreted.

According to the invention, the visualisation system **1** comprises a source module **10,** which is provided with a first interface **11** for displaying a source message **100,** which is a text message.

The visualisation system **1** further comprises an annotation module **20,** which is provided with a second interface **21** for recording a first annotation **22** of the source message **100** and for displaying said first annotation **22** of said source message **100.** Said first annotation **22** is recorded and displayed in the form of video images.

The visualisation system **1** further comprises a time display module **30,** which is provided with a third interface **31** for indicating a time lapse **110.** The term time lapse is used herein to denote a certain extent in the time dimension, i.e. a certain duration, relative to which the progress of a source message or an annotation may be referenced. Preferably, said time lapse **110** is displayed by use of a time axis **32,** although other graphical representations may be used to the same effect.

For the purpose of the invention, the term "interface" refers here to means for communicating information, which is the result of the technical processes of the visualisation system **1,** to the user. In particular, the interface presents technical data, such as the value of the system's internal variables or registers that point to specific positions in the messages and annotations on which the system operates. The interface also ensures interaction with the user of the system, for example by allowing the user to manipulate such variables. Said interface typically is a graphical user interface (GUI). According to a preferred embodiment of the invention, said visualisation system **1** makes use of a screen. Typically, all interfaces described herein are displayed in the same screen, for example as separate windows on a windows-based GUI platform. Alternatively, the various interfaces described herein may use a plurality of screens. In order to obtain user input, the interfaces may further comprise controllers, which may include the human interface devices commonly found in computer systems (e.g., keyboards, mice, touchpads, touchscreens, etc.) as well as more specialized peripherals (e.g., head motion trackers, eye movement trackers, foot pedals, etc.).

The time display module **30** and the source module **10** are linked.

According to one embodiment not according to the invention, the source module **10** displays a source message **100** in the audio or video format, said source message **100** being inherently characterized by a duration and a natural playback speed. The time display module **30** displays a time lapse **110** which corresponds to the duration of the source message **100,** thereby linking any position in the source message **100** to a corresponding position of the time lapse **110.** The user can thus select a certain position in the source message **100,** either by selecting it directly in the first interface **11,** or by selecting its corresponding position in the time lapse **110** in the third interface **31** of the time display module **30.**

According to the invention, the source message **100** is a text file, with
a source text that has to be annotated. The time display module **30** and the source module **10** are then linked by dividing the source message **100,** which is displayed in the first interface **11** of the source module **10,** in basic units and dividing the time lapse **110** in a same amount of basic time intervals, wherein every single one of said basic units is assigned to a corresponding time interval. It will be clear that the first basic unit of the source message **100** then corresponds to the first basic time interval of the time lapse **110** and that the last basic unit of the source message **100** then corresponds to the last basic time interval of the time lapse **110.**
As a result, a position in the source message **100,** corresponding to a particular basic unit, is linked to a particular position of the time lapse **110,** corresponding to a particular basic time interval. When the user indicates a certain position in the source message **100,** a corresponding position of the time lapse **110** will also be selected. Thus, portions of said source text **100** are thus provided with respective durations, which are defined by a starting position and an ending position in said time lapse **110.** Said portions comprise at least a basic unit.

As the source message **100** is a text file, a text character will typically form the basic unit of the source text, to which a basic unit interval in the form of a text character duration can be assigned. It will be clear that the total duration of the source text equals the sum of all text character durations. The inventors have found that a text displayed at normal reading and interpretation pace typically corresponds with an average text character duration of about 60ms per character; this could be considered as the "natural playback speed" of the text.
The source module **10** further comprises a moveable position indicator **12** for indicating a position in the text of the source message **100.** Said moveable position indicator **12** may indicate said position in the text by providing a change in colour of the displayed text. Preferably, said moveable position indicator **12** is a moving text pointer, placed close to a text character, thereby marking the position in the text.

The visualisation system **1** further comprises a controller for controlling the pace of annotation. Said controller for controlling the pace of annotation may refer to a controller that is dynamically and actively managed by the user. Examples include a foot pedal, which the user can use to increase or decrease the pace of annotation, buttons or trackballs. Said controllers are typically controllable by the feet.
Alternatively, said controller for controlling the pace of annotation may refer to a controller which may be part of the visualisation system **1,** and which functions by adjusting in an autonomous way the pace of annotation on the basis of the reactions of the user of the system. A non-limiting example of such a controller is an eye-tracking system, capable of measuring eye positions and eye movement.

For the purpose of the invention, the terms "dynamic control" or "dynamic management" refer to the possibility for the user of the system to adjust in real-time and preferably continuously the pace of annotation. The effect of dynamic control is that it allows the user to synchronize his annotations to the source message **100.**
For the purpose of the invention, the term "synchronous annotation" refers to a form of annotating wherein annotation is provided to a portion of the source message **100,** whereby the starting position and ending position of said portion of the source message **100** correspond with the starting position and ending position respectively, of the portion of the time lapse **110** that corresponds to said portion of the source message **100.** In other words, synchronous annotation provides for annotation within a time interval that is used naturally to communicate the source message **100,** e.g., orally or through reading. It is an advantage of the present invention that said time interval can be adjusted in real-time by the user of the system. This type of annotation is also referred to as "simultaneous annotation".

The following illustrates said dynamic control of the pace of annotation by the user when providing a source text with synchronous annotation. It will however be clear that the same can be applied with a source message **100** in audio or video format.
Figure 2a shows a third interface **31** of a time display module **30** indicating a time axis **32,** said axis being linked with a source message **100** according to the description here above, thereby assigning a duration to said source message **100.** Portions of the source message **100** have already been annotated, as can be seen on an annotation axis **60,** showing a set of annotations **61,62,63,** as well as on the time axis **32** (shown here as hatched blocks for clarity reasons). Due to the annotation being synchronous, the starting positions and ending positions of the annotations on the time axis **32** and the annotation axis **60** correspond, thereby linking the annotation module **20** and the time display module **30.** The annotation axis **60** is preferably displayed in the third interface **31.** The user can then select any position **64** in the time axis **32,** which is linked to a corresponding position in the source message **100** and decide to start recording an annotation. A synchronous annotation recording will start by activating both the moveable position indicator **12** in the source module **10,** which will then proceed at a natural pace of 60ms per text character, and by activating the annotation module. This is typically done by use of a record button. The recording will then start from the position **64** which is indicated by the moveable position indicator **12.** The recording of the new annotation is shown in Figure 2b. As the user has already annotated several parts of the source message **100,** he only has a limited amount of time to add a new annotation starting from position **64.** The recording of the new annotation would be interrupted the moment the newly recorded annotation overlaps with the upcoming, already recorded, annotation (annotation **61** on Figure 2a). The dynamic control of the visualization system **1** allows the user to, for this particular case, reduce the pace of annotation. The user thereby decreases the average pace of the moveable position indicator, meaning that the text is traversed at a slower tempo. The reduction of the pace then results in a, preferably continuous, recalculation of the available time which is visually represented in the annotation axis **60** and the time axis **32.** The annotation axis **60** is redrawn such that the extra time available for recording is visible on the annotation axis **60,** as is visible in the representation of the already recorded annotations **61,62,63** in Figure 2b.

According to a preferred embodiment of the invention, the visualisation system 1 is able to record and display more than one level of annotation. For this purpose, the system comprises a feedback module **50,** which is configured with a fourth interface **51** for recording and displaying a second annotation **52** to said source message **100** or to said first annotation **22.** Said second annotation **52** will be typically used by the teacher with the purpose of giving comment to the first annotation **22,** representing the work of the student, which was recorded by use of the annotation module **20.** Although the feedback module **50** is configured to be able to record and display a second annotation **52** in text, audio or video format, said second annotation **52** is preferably recorded and displayed in the form of video images.

The annotations recorded by the annotation module **20** or by the feedback module **50** are accessible in the visualisation system **1.** This is typically done by displaying said recorded annotations in the third interface **31** of the time display module **30.** The annotations by the annotation module **20** and the annotations by the feedback module **50** are preferably represented in a separate track bar, being an annotation axis **60** and a feedback axis **65** respectively. Said time axis, annotation axis and feedback axis **32, 60, 65** can be displayed grouped in said third interface **31.**

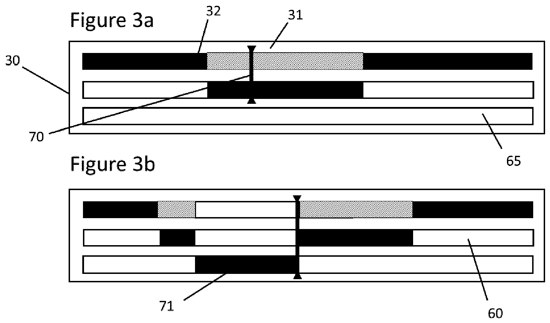

The visualisation system further provides for consecutive annotation. For the purpose of the invention, the term "consecutive annotation" refers to a form of annotating, wherein the user adds an annotation which is linked to a certain position of the source message.
The following illustrates the use of consecutive annotations by the visualisation system **1.** Figure 3a shows a third interface **31** of a time display module **30** indicating a time axis **32,** an annotation axis **60** and a feedback axis **65.** A portion of the source message 100 has already been annotated synchronously as is visible on the time axis **32** (by use of hatched blocks for clarity reasons) and the annotation axis **60.** The user selects a position **70** on the time axis **32** and can start to make an instant comment. This new annotation is visible on the feedback axis (annotation **71),** as illustrated in Figure 3b, and causes a break in the visual representation of the source message in the time axis **32** and the annotation in the annotation axis **62.**

In an alternative embodiment of the invention, the visualization system **1** comprises at least one additional module with an interface for recording and displaying a third level of annotations. Said at least one additional module is configured to be able to record and display a third level of annotations in any format.

The invention also pertains to methods of using the visualization system described above. A typical use of for recording a synchronous annotation to a source text with the visualization system **1** may comprise the following: in a first step, the source module **10** is activated by displaying a source text in the first interface **11.** The user then selects a starting position where he would like to add an annotation. This is done by selecting a position in the source text, displayed in the first interface **11,** or by selecting the corresponding position on the time axis **32,** displayed in the third interface **31.** It will be clear that the corresponding position on the time axis **32** or in the source text respectively will also be selected. In a second step, the user activates the moveable position indicator **12** in the source module **10,** which will then proceed at a natural pace of 60ms per text character, and activates a command in the second interface **21** of the annotation module **20,** which initiates the recording of an annotation, starting from said selected starting position. A controller for the pace of annotation will adjust the pace of annotation, either by dynamic control by the user or by automatic adjustment on the basis of the user's actions. Due to the dynamic regulation of the annotation pace, said recorded annotation will be synchronised with the annotated portion of the source text and will not overlap with other annotations. The same portion of the source text will therefore not have two annotations in a single track. The user can end the recording by deactivating the command in the second interface **21** of the annotation module **20.**

The present invention also pertains to a computer program product, optionally stored on a computer-readable medium, comprising code means adapted to cause a processor to perform the functions of the visualisation system **1** as described above. The processor may be part of a computer system (such as a personal computer, desktop computer, laptop computer, notebook, tablet, smart phone, and the like), whereby the interfaces described herein are implemented in the GUI environment on the screen of said computer system.

## Claims

1. A visualisation system (1) for annotating a source message (100), comprising
- a source module (10), provided with a first interface (11) for displaying said source message (100), said source module (10) comprising a moveable position indicator (12) for indicating a position in said source message;
- an annotation module (20), provided with a second interface (21) for recording and displaying a first annotation (22) of said source message (100), wherein said source message is annotated in sign language;
- a time display module (30), provided with a third interface (31) for indicating a time lapse (110);
wherein said source message (100) is a text message and wherein said source message (100) is linked to said time lapse (110), thereby providing portions of said source message (100) with respective durations defined by a starting position and an ending position in said time lapse (110);
wherein said annotation is in the form of video images;
wherein the visualisation system further comprises a controller for controlling the pace of annotation by decreasing an average pace of said moveable position indicator; and
wherein the pace of annotating said source message (100) is dynamically controllable by the user of the system;
wherein said source message (100) is divided in a plurality of basic units and wherein said time lapse (110) is divided in a plurality of basic time intervals, wherein each basic unit is linked to a corresponding basic time interval, thereby providing each position in said source text with a corresponding position in said time lapse (110), wherein said basic unit is a text character, and
wherein the system (1) is configured to have said moveable position indicator (12), upon activation, proceed at a pace of 60 ms per text character.

2. The visualisation system (1) according to claim 1, wherein the pace of annotating said source message is dynamically controllable by the user of the system through interaction with the controller.

3. The visualisation system (1) according to claim 2, wherein the pace of annotating said source message is dynamically controllable by the user of the system through hands-free interaction with the controller.

4. The visualisation system (1) according to any of the preceding claims, wherein said controller for controlling the pace of annotation comprises a system for tracking eye movement.

5. The visualisation system (1) according to any of the preceding claims, wherein said controller for controlling the pace of annotation comprises at least one pedal for manipulation by foot.

6. The visualisation system (1) according to claim 1, wherein said visualisation system (1) further comprises a feedback module (50), provided with a fourth interface (51) for recording and displaying a second annotation (52) to said first annotation (51) in the form of text, audio or video images.

7. The visualisation system (1) according to any one of the preceding claims, wherein said annotation is synchronous, allowing annotation of a portion of the source message (100), whereby the starting position and ending position of said portion of the source message (100) correspond with the starting position and ending position respectively, of the portion of the time lapse (110) that corresponds to said portion of the source message (100).

8. The visualisation system (1) according to claims 1 to 7, wherein said annotation is consecutive, allowing the user to add an annotation which is linked to a certain position of the source message (100).

9. A computer program product comprising code means configured to cause a processor to perform the functions of said visualisation system (1) according to any one of claims 1-8.

## Patentansprüche

1. Visualisierungssystem (1) für Anmerkungen zu einer Quellennachricht (100), umfassend
- ein Quellenmodul (10), das mit einer ersten Schnittstelle (11) zum Anzeigen der Quellennachricht (100) versehen ist, wobei das Quellenmodul (10) einen beweglichen Positionsindikator (12) zum Anzeigen einer Position in der Quellennachricht umfasst;
- ein Anmerkungsmodul (20), das mit einer zweiten Schnittstelle (21) zum Aufzeichnen und Anzeigen einer ersten Anmerkung (22) der Quellennachricht (100) versehen ist, wobei die Quellennachricht in Zeichensprache angemerkt ist;
- ein Zeitanzeigemodul (30), das mit einer dritten Schnittstelle (31) zum Anzeigen eines Zeitablaufs (110) versehen ist;
wobei die Quellennachricht (100) eine Textnachricht ist und wobei die Quellennachricht (100) mit dem Zeitablauf (110) verbunden ist, wodurch Teile der Quellennachricht (100) mit entsprechenden Dauern versehen sind, die durch eine Anfangsposition und eine Endposition in dem Zeitablauf (110) definiert sind;
wobei die Anmerkung die Form von Videobildern aufweist;
wobei das Visualisierungssystem weiter eine Steuerung zum Steuern des Tempos der Anmerkung durch Senken eines durchschnittlichen Tempos des beweglichen Positionsindikators umfasst; und
wobei das Tempo der Quellennachricht (100) durch den Benutzer des Systems dynamisch steuerbar ist;
wobei die Quellennachricht (100) in mehrere Basiseinheiten unterteilt ist und wobei der Zeitablauf (110) in mehrere Basiszeitintervalle unterteilt ist, wobei jede Basiseinheit mit einem entsprechenden Basiszeitintervall verbunden ist, wodurch jede Position in dem Quellentext mit einer entsprechenden Position in dem Zeitablauf (110) versehen ist, wobei die Basiseinheit ein Textzeichen ist und wobei das System (1) konfiguriert ist, den beweglichen Positionsindikator (12), nach Aktivierung, mit einem Tempo von 60 ms pro Textzeichen fortbewegen zu lassen.

2. Visualisierungssystem (1) nach Anspruch 1, wobei das Tempo zum Anmerken der Quellennachricht durch den Benutzer des Systems durch Interaktion mit der Steuerung dynamisch steuerbar ist.

3. Visualisierungssystem (1) nach Anspruch 2, wobei das Tempo zum Anmerken der Quellennachricht durch den Benutzer des Systems durch freihändige Interaktion mit der Steuerung dynamisch steuerbar ist.

4. Visualisierungssystem (1) nach einem der vorstehenden Ansprüche, wobei die Steuerung zum Steuern des Tempos der Anmerkung ein System zum Verfolgen von Augenbewegung umfasst.

5. Visualisierungssystem (1) nach einem der vorstehenden Ansprüche, wobei die Steuerung zum Steuern des Tempos der Anmerkung mindestens ein Pedal zur Manipulation mit einem Fuß umfasst.

6. Visualisierungssystem (1) nach Anspruch 1, wobei das Visualisierungssystem (1) weiter ein Feedbackmodul (50) umfasst, das mit einer vierten Schnittstelle (51) zum Aufzeichnen und Anzeigen einer zweiten Anmerkung (52) zu der ersten Anmerkung (51) in der Form von Text, Audio oder Videobildern umfasst.

7. Visualisierungssystem (1) nach einem der vorstehenden Ansprüche, wobei die Anmerkung synchron ist, wodurch eine Anmerkung zu einem Teil der Quellennachricht (100) möglich ist, wobei die Anfangsposition und die Endposition des Teils der Quellennachricht (100) der Anfangsposition bzw. Endposition des Teils des Zeitablaufs (110) entspricht, der dem Teil der Quellennachricht (100) entspricht.

8. Visualisierungssystem (1) nach Ansprüchen 1 bis 7, wobei die Anmerkung konsekutiv ist, sodass der Benutzer eine Anmerkung hinzufügen kann, die mit einer gewissen Position der Quellennachricht (100) verbunden ist.

9. Computerprogrammprodukt, umfassend Codemittel, die konfiguriert sind, einen Prozessor zu veranlassen, die Funktionen des Visualisierungssystems (1) nach einem der Ansprüche 1-8 durchzuführen.

## Revendications

1. Système de visualisation (1) pour annoter un message source (100), comprenant
- un module source (10), muni d'une première interface (11) pour afficher ledit message source (100), ledit module source (10) comprenant un indicateur de position mobile (12) pour indiquer une position dans ledit message source ;
- un module d'annotation (20), muni d'une deuxième interface (21) pour enregistrer et afficher une première annotation (22) dudit message source (100), dans lequel ledit message source est annoté en langue des signes ;
- un module d'affichage de temps (30), muni d'une troisième interface (31) pour indiquer un laps de temps (110) ;
dans lequel ledit message source (100) est un message textuel et dans lequel ledit message source (100) est lié audit laps de temps (110), fournissant de ce fait des portions dudit message source (100) avec des durées respectives définies par une position de départ et une position de fin dans ledit laps de temps (110) ;
dans lequel ladite annotation est sous la forme d'images vidéo ;
dans lequel le système de visualisation comprend en outre une unité de commande pour commander la cadence d'annotation en diminuant une cadence moyenne dudit indicateur de position mobile ; et
dans lequel la cadence d'annotation dudit message source (100) peut être commandée de façon dynamique par l'utilisateur du système ;
dans lequel ledit message source (100) est divisé en une pluralité d'unités de base et dans lequel ledit laps de temps (110) est divisé en une pluralité d'intervalles de temps de base, dans lequel chaque unité de base est liée à un intervalle de temps de base correspondant, fournissant de ce fait chaque position dans ledit texte source avec une position correspondante dans ledit laps de temps (110), dans lequel ladite unité de base est un caractère textuel, et
dans lequel le système (1) est configuré pour avoir ledit indicateur de position mobile (12), lors de l'activation, qui continue à une cadence de 60 ms par caractère textuel.

2. Système de visualisation (1) selon la revendication 1, dans lequel la cadence d'annotation dudit message source peut être commandée de façon dynamique par l'utilisateur du système par interaction avec l'unité de commande.

3. Système de visualisation (1) selon la revendication 2, dans lequel la cadence d'annotation dudit message source peut être commandée de façon dynamique par l'utilisateur du système par interaction en mains libres avec l'unité de commande.

4. Système de visualisation (1) selon l'une quelconque des revendications précédentes, dans lequel ladite unité de commande pour commander la cadence d'annotation comprend un système pour suivre le mouvement des yeux.

5. Système de visualisation (1) selon l'une quelconque des revendications précédentes, dans lequel ladite unité de commande pour commander la cadence d'annotation comprend au moins une pédale pour manipulation au pied.

6. Système de visualisation (1) selon la revendication 1, dans lequel ledit système de visualisation (1) comprend en outre un module de rétroaction (50), muni d'une quatrième interface (51) pour enregistrer et afficher une seconde annotation (52) à ladite première annotation (51) sous la forme de texte, d'audio ou d'images vidéo.

7. Système de visualisation (1) selon l'une quelconque des revendications précédentes, dans lequel ladite annotation est synchrone, permettant l'annotation d'une portion du message source (100), de sorte que la position de départ et la position de fin de ladite portion du message source (100) correspondent respectivement à la position de départ et à la position de fin, de la portion du laps de temps (110) qui correspond à ladite portion du message source (100).

8. Système de visualisation (1) selon les revendications 1 à 7, dans lequel ladite annotation est consécutive, permettant à l'utilisateur d'ajouter une annotation qui est liée à une certaine position du message source (100).

9. Produit formant programme informatique comprenant un moyen formant code configuré pour amener un processeur à effectuer les fonctions dudit système de visualisation (1) selon l'une quelconque des revendications 1 à 8.
